# DEMANDE DE BREVET EUROPEEN

(11) **EP 1 398 218 A1**
(43) Date de publication de la demande: **17.03.2004**
(21) Numéro de dépôt: 03292249.4
(22) Date de dépôt: 12.09.2003
(51) Int. Cl.: B60R 7/04

(54) **Dispositif de fixation d'un sac dans un véhicule**

(30) Priorité: 13.09.2002 FR 0211374
(71) Demandeur: Renault s.a.s., 92100 Boulogne Billancourt (FR)
(72) Inventeur: Guarda, Stéphane, 78310 Maurepas (FR)

(57) **Abrégé**

Dispositif de fixation d'un sac (10) dans un véhicule automobile, caractérisé en ce qu'il comporte au moins un élément d'accrochage (15) destiné à coopérer avec au moins une boucle (5) de ceinture de sécurité ou avec au moins un élément de retenue d'un siège enfant.

## Description

L'invention concerne un dispositif de retenue d'un sac posé sur un élément et plus particulièrement un dispositif de retenue d'un sac posé sur le siège d'un véhicule automobile.

En général les personnes qui conduisent, et particulièrement les femmes, ont un sac à main contenant différents biens personnels et en particulier des documents, tels que le permis de conduire et les documents du véhicule, et souvent de l'argent.
Afin que le contenu du sac soit accessible, ce dernier est le plus souvent posé sur le siège localisé à coté du conducteur, ou sur le siège arrière.

La disposition du sac sur un des sièges pose plusieurs problèmes. Le premier de ces problèmes est l'instabilité du sac sur le siège, ledit sac pouvant tomber du siège lors d'une manoeuvre ou d'un freinage brusque, la chute du sac pouvant disperser son contenu sur le sol du véhicule ou engendrer un réflexe dangereux de la part du conducteur souhaitant retenir ledit sac lors de la manoeuvre.

Afin de résoudre ce problème il est parfois utilisé des sangles élastiques plaquant le sac contre le dossier de siège. Cette sangle étant liée au véhicule, l'utilisation d'un autre véhicule, par exemple de location, ne permet pas d'avoir un maintien du sac quelque soit le type de véhicule.

Un autre problème est l'accessibilité du sac par une personne extérieure au véhicule lorsque la vitre adjacente audit sac est ouverte, ou dans le cas d'un véhicule cabriolet découvert. Cette accessibilité est critique en particulier en ville lorsque le véhicule est à une vitesse lente ou arrêté à un feu. Il existe beaucoup de cas de vol de sac par des personnes ayant accès à celui-ci par une fenêtre ouverte ou également par ouverture de la porte. L'utilisation d'une sangle élastique ceinturant le sac n'est pas suffisant pour éviter son enlèvement.
Afin de pallier ces inconvénients, l'invention a pour objet un sac comportant un dispositif de fixation, suffisamment résistant, à un élément du véhicule permettant ainsi d'éviter tout enlèvement ou chute du sac sans un déverrouillage préalable.

L'invention a également pour objet, un dispositif de fixation intégré au sac pouvant coopérer avec une boucle de ceinture de sécurité ou avec un élément de retenue d'un siège enfant.
L'invention a également pour objet, un dispositif de fixation pouvant être adapté à un sac non pourvu d'un tel dispositif de fixation.

Selon une caractéristique de l'invention, le dispositif de fixation d'un sac comporte au moins un élément d'accrochage destiné à coopérer avec au moins une boucle de ceinture de sécurité ou avec au moins un élément de retenue d'un siège enfant.

Selon une autre caractéristique de l'invention, l'élément d'accrochage comporte une boucle de liaison dans laquelle passe une sangle fixée sur le sac.

Selon une autre caractéristique de l'invention, la sangle est un élément destiné à porter le sac.

Selon une autre caractéristique de l'invention, l'élément d'accrochage est escamotable dans une base fixée au sac.

Selon une autre caractéristique de l'invention, l'élément d'accrochage est une partie d'un élément de fermeture du sac.

Selon une autre caractéristique de l'invention, l'élément d'accrochage forme un support pour une inscription.

Selon une autre caractéristique de l'invention, l'élément d'accrochage est un pêne.

Selon une autre caractéristique de l'invention, l'élément d'accrochage comporte une boucle pouvant s'ouvrir et se fixer à un élément du sac

D'autres caractéristiques et avantages de l'invention apparaîtront à la lecture de la description d'exemples de réalisation d'un dispositif de fixation d'un sac aux dessins annexés dans lequel :
- La figure 1. représente un sac équipé du dispositif selon l'invention, disposé sur un siège.
- La figure 2 représente un sac pouvant être équipé d'un dispositif selon l'invention.
- La figure 3 représente un exemple de réalisation d'un élément d'accrochage selon l'invention.
- La figure 4 représente un exemple de réalisation d'un élément d'accrochage selon l'invention, adaptable à un sac non pourvu d'un tel dispositif.

Dans la description qui suit le terme sac sera à interpréter comme concernant tous les types de sacs pouvant être disposés dans un véhicule à proximité d'un conducteur ou d'un passager ou sur un siège, tel que par exemple des sacs à main, sacs à dos, mallettes, portes documents divers ainsi que tous objets pouvant avoir un intérêt à être maintenu avec le dispositif selon l'invention.

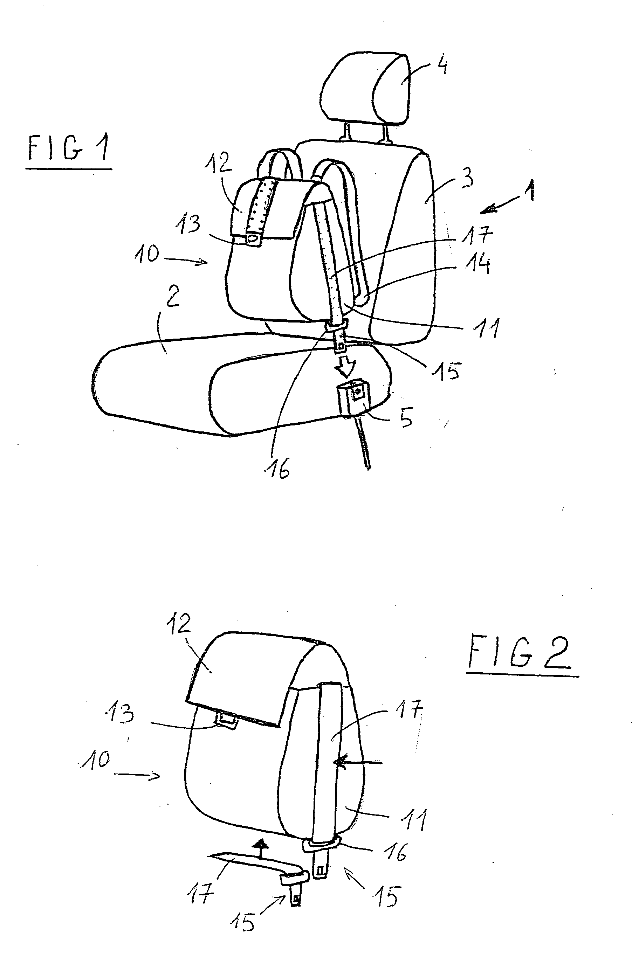

La figure 1 représente un siège 1, comportant une assise 2 et un dossier 3, qui peut recevoir éventuellement un appui-tête 4, une boucle de ceinture de sécurité 5 destiné à recevoir un pêne (non représenté) de ladite ceinture lors de l'installation d'un passager sur le siège 1. La boucle de ceinture de sécurité 5 peut être liée au siège 1 ou à un autre élément du véhicule.

La figure 1 représente également un sac 10 comportant au moins un coté 11 et éventuellement un rabat de fermeture 12 pouvant comporter une boucle 13 de fermeture du rabat 12. Le sac 10 peut être également pourvu d'au moins une sangle de transport 14 ou d'une poignée.

Dans l'exemple de réalisation représenté aux figures 1 et 2 le coté 11 du sac comporte un élément d'accrochage 15 en forme de pêne pouvant coopérer avec la boucle de ceinture de sécurité 5.

Dans une première variante de réalisation le pêne 15 comporte une boucle de liaison 16 dans laquelle passe une sangle 17, fixée au coté 11 du sac 10, formant ainsi une charnière permettant une articulation du pêne 15 afin d'en faciliter la fixation dans la boucle de ceinture de sécurité 5. La fixation de la sangle 17 peut-être effectuée, sur le sac 10, par couture ou par tout autre moyen de liaison. La fixation de la sangle 17 peut être effectuée également sur le fond du sac. La sangle 17 qui traverse la boucle 16 du pêne 15 peut être une sangle 14 de transport du sac 10.

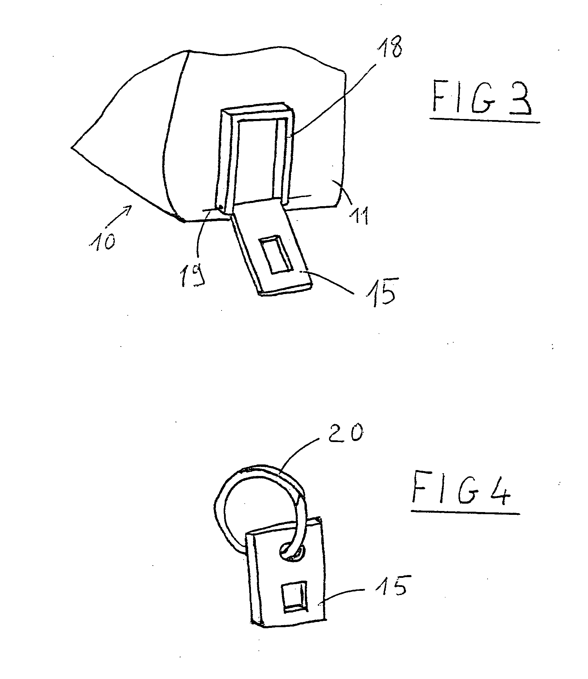

Selon un autre mode de réalisation représenté à la figure 3 l'élément d'accrochage 15 est escamotable dans une base 18 fixée sur le sac 10. L'élément d'accrochage 15 est monté à pivotement autour d'un axe transversal 19 porté par la partie inférieure de la base 18, afin d'être déplacé d'une position d'utilisation vers une position escamotée. La rotation du pêne 15 peut être remplacée par une translation. Dans la position escamotée, par exemple, la partie de l'élément d'accrochage 15 qui reste visible peut comporter une inscription par exemple un logo, une marque ou un graphisme décoratif.

Selon un autre mode de réalisation non représenté le pêne est une partie de la boucle 13 de fermeture du rabat de fermeture 12.

Afin de pouvoir équiper les sacs qui sont dépourvus de fixation selon l'invention il est possible de prévoir un élément d'accrochage 15 adaptable sur un sac et formé d'une sangle 17 muni d'un pêne 15. Tel que représenter à la figure 4, il est également possible de prévoir un élément d'accrochage 15 muni d'une boucle 20, par exemple un anneau, pouvant s'ouvrir et se fixer, par exemple, à une boucle métallique du sac 10. Cet élément d'accrochage 15 peut être utilisé en complément d'un dispositif existant.

Selon un autre mode de réalisation non représenté le pêne 15 est remplacé par un élément d'accrochage compatible avec des fixations destinées à la retenues de sièges enfants.

Il est également possible de prévoir un pêne 15 interchangeable pour correspondre à centaine différence de standard de boucle 5 de ceinture ou de fixation de siège enfant.

Le sac 10 peut également recevoir plusieurs dispositif de fixation selon l'invention, tel qu'un pêne 15 de chaque coté du sac, par exemple pour fixer le sac sur deux boucles de ceinture.

## Revendications

1. Dispositif de fixation d'un sac (10) dans un véhicule automobile, **caractérisé en ce qu'**il comporte au moins un élément d'accrochage (15) destiné à coopérer avec au moins une boucle (5) de ceinture de sécurité ou avec au moins un élément de retenue d'un siège enfant.

2. Dispositif de fixation selon la revendication 1, **caractérisé en ce que** l'élément d'accrochage (15) comporte une boucle de liaison (16) dans laquelle passe une sangle (17) fixée sur le sac (10).

3. Dispositif selon la revendication 2, **caractérisé en ce que** la sangle (17) est un élément destiné à porter le sac (10).

4. Dispositif selon la revendication 1, **caractérisé en ce que** l'élément d'accrochage (15) est escamotable dans une base (18) fixée au sac (10).

5. Dispositif selon la revendication 1, **caractérisé en ce que** l'élément d'accrochage (15) est une partie d'un élément (13) de fermeture du sac.

6. Dispositif selon l'une quelconque des revendications précédentes, **caractérisé en ce que** l'élément d'accrochage (15) forme un support pour une inscription.

7. Dispositif selon l'une quelconque des revendications précédentes, **caractérisé en ce que** l'élément d'accrochage (15) est un pêne.

8. Dispositif selon la revendication 1, **caractérisé en ce que** l'élément d'accrochage (15) comporte une boucle (20) pouvant s'ouvrir et se fixer à un élément du sac.
